# EUROPÄISCHE PATENTANMELDUNG

(11) **EP 3 878 786 A1**
(43) Veröffentlichungstag der Anmeldung: **15.09.2021**
(21) Anmeldenummer: 21160360.0
(22) Anmeldetag: 03.03.2021
(51) Int. Cl.: B65H 67/06

(54) **VERFAHREN ZUM ENTNEHMEN VON HÜLSEN AUS EINEM HÜLSENMAGAZIN SOWIE HÜLSENMAGAZIN**

(30) Priorität: 09.03.2020 DE 102020106324
(71) Anmelder: Maschinenfabrik Rieter AG, 8406 Winterthur (CH)
(72) Erfinder: PILAR, Evzen, 57001 Litomysl (CZ)
(74) Vertreter: Canzler & Bergmeier Patentanwälte Partnerschaft mbB

(57) **Zusammenfassung**

Die Erfindung betrifft ein Verfahren zum Entnehmen von einzelnen Hülsen (8) aus einem Hülsenmagazin (7) einer Textilmaschine (1), wobei das Hülsenmagazin (7) ein Transportelement (16) mit einer Vielzahl von Haltern (15) aufweist, von denen jeder eine Hülse (8) halten kann, das Transportelement (16) angetrieben wird, um einen Halter (15) mit einer Hülse (8) zu einer Entnahmestelle (21) des Hülsenmagazins (7) zu bewegen und an der Entnahmestelle (21) eine Entnahmeeinrichtung (12) angeordnet ist, um die Hülse (8) von dem Halter (15) zu nehmen. In dem Hülsenmagazin (7) werden mehrere Transportelemente (16) angeordnet. Durch eine Steuerung (18) werden die einzelnen Transportelemente (16) derart angesteuert, dass ein Halter (15) zumindest eines der Transportelemente (16) mit einer Hülse (8) an die Entnahmestelle (21) bewegt wird und die Entnahmeeinrichtung (12) für die Entnahme der Hülse (8) von dem Halter (15) dann betätigt wird, wenn sich der Halter (15) des zumindest einen Transportelements (16) mit seiner Hülse (8) an der Entnahmestelle (21) befindet, während sich die Halter (15) der anderen Transportelemente (16) außerhalb der Entnahmestelle (21) befinden. Ferner betrifft die Erfindung ein entsprechendes Hülsenmagazin (7).

## Beschreibung

Die vorliegende Erfindung betrifft ein Verfahren zum Entnehmen von einzelnen Hülsen aus einem Hülsenmagazin einer Textilmaschine, wobei das Hülsenmagazin ein Transportelement mit einer Vielzahl von Haltern aufweist, von denen jeder eine Hülse halten kann, das Transportelement angetrieben wird, um einen Halter zu einer Entnahmestelle zu bewegen und an der Entnahmestelle eine Entnahmeeinrichtung angeordnet ist, um eine Hülse von dem Halter zu nehmen sowie ein entsprechendes Hülsenmagazin.

Aus der DE 10 2018 111 433 A1 ist eine Textilmaschine bekannt, an der mehrere Hülsenmagazine angeordnet sind. Jedes Hülsenmagazin weist ein Zugmittel mit Hülsenhalterungen auf, an denen Hülsen angeordnet sind. Mit einer Entnahmeeinrichtung wird eine Hülse aus dem Hülsenmagazin entnommen. Die Entnahmeeinrichtung kann ein Schieber sein, welcher die Hülse von einer Hülsenhalterung des Zugmittels herunterschiebt. Sie kann für nur ein einzelnes Hülsenmagazin oder für mehrere Hülsenmagazine gleichzeitig vorgesehen sein, ggf. mit einem Versatz der Zugmittel, damit auch bei einer gemeinsamen Anordnung an mehreren Hülsenmagazinen nur eine einzige Hülse abgenommen wird. In jedem Hülsenmagazin kann eine Art von Hülsen gespeichert werden. Bei mehreren Arten von Hülsen, die an der Textilmaschine eingesetzt werden können, sind auch mehrere Hülsenmagazine erforderlich.

Aus der US 4,641,740 ist ein Hülsenmagazin bekannt, welches eine Kette als Zugmittel aufweist, an der sowohl in Längs- als auch in Querrichtung Hülsen angeordnet sind. Die Hülsen sind an dem Zugmittel entweder in Linien untereinander oder versetzt zueinander befestigt. Eine Entnahmeeinrichtung entnimmt immer gleichzeitig alle Hülsen einer Linie. Die Entnahme einzelner Hülsen ist damit nicht möglich.

Aufgabe der vorliegenden Erfindung ist es, in einem Hülsenmagazin mehrere unterschiedliche Arten von Hülsen speichern zu können und diese bei Bedarf einzeln oder mehrere gleichzeitig aus dem Hülsenmagazin entnehmen zu können.

Die Aufgabe wird gelöst durch ein Verfahren und ein Hülsenmagazin mit den Merkmalen der unabhängigen Patentansprüche.

Das erfindungsgemäße Verfahren dient dem Entnehmen von einzelnen Hülsen aus einem Hülsenmagazin einer Textilmaschine. Das Hülsenmagazin weist ein Transportelement mit jeweils einer Vielzahl von Haltern auf, von denen jeder eine Hülse halten kann. Das Transportelement wird angetrieben, um einen Halter mit einer Hülse zu einer Entnahmestelle des Hülsenmagazins zu bewegen. An der Entnahmestelle ist eine Entnahmeeinrichtung angeordnet, um die Hülse von dem Halter zu nehmen. Erfindungsgemäß werden in dem Hülsenmagazin mehrere Transportelemente angeordnet. Dabei kann das Hülsenmagazin derart mit Hülsen befüllt werden, dass jedes Transportelement ausschließlich eine bestimmte Art von Hülsen aufweist. Selbstverständlich können auch mehrere Transportelemente des Hülsenmagazins gleiche Arten von Hülsen aufnehmen, wenn dies erforderlich ist oder es können an einem Transportelement mehrere unterschiedliche Arten von Hülsen gespeichert werden.

Durch die erfindungsgemäße Steuerung werden die einzelnen Transportelemente derart angesteuert, dass zumindest ein Halter zumindest eines der Transportelemente mit einer Hülse an die Entnahmestelle bewegt wird. Die Entnahmeeinrichtung wird für die Entnahme der Hülse von dem Halter dann betätigt, wenn sich der Halter des zumindest einen Transportelements mit seiner Hülse an der Entnahmestelle befindet, während sich die Halter der anderen Transportelemente außerhalb der Entnahmestelle befinden. Es kann damit eine vorbestimmte Anzahl von Haltern mit Hülsen, vorzugsweise nur ein einziger Halter, an die Entnahmestelle bewegt werden. Die Erfindung ermöglicht, dass Halter der einzelnen Transportelemente je nach Bedarf der Entnahmestelle so zugestellt werden, dass die Entnahmeeinrichtung an der Entnahmestelle die vorbestimmten Hülsen vorfindet und entnehmen kann. Damit ist es möglich, dass die gewünschte Art von Hülse, welche sich in einem oder mehreren der Transportelemente befindet, gezielt an die Entnahmestelle gefördert und aus dem Hülsenmagazin entnommen werden kann. Die Hülse wird dann der Textilmaschine, beispielsweise einer Spulstelle einer Spinnmaschine, durch ein entsprechendes Fördermittel der Textilmaschine zugeführt. Es sind keine separaten Hülsenmagazine für die einzelnen Arten von Hülsen mehr erforderlich. Die unterschiedlichen Arten können in einem einzigen Hülsenmagazin gespeichert werden. Dennoch ist es möglich, auf die erforderliche Hülse zuzugreifen und der Spulstelle zuzuführen.

Besonders vorteilhaft ist es, wenn die Entnahmeeinrichtung Hülsen von mehreren Transportelementen entnehmen kann. Es ist damit nur eine einzige Entnahmeeinrichtung für mehrere Transportelemente, vorzugsweise für alle Transportelemente des Hülsenmagazins, und für verschiedene Arten von Hülsen erforderlich. Das Hülsenmagazin kann damit kostengünstig und besonders effizient betrieben werden.

Vorteilhaft ist es, wenn zumindest ein vorbestimmtes Transportelement angesteuert wird, um einen Halter mit einer Hülse an die Entnahmestelle der Entnahmeeinrichtung zu bewegen. Das Transportelement wird hierfür mittels der Steuerung und einem Motor für das Transportelement in Bewegung versetzt. Sobald sich eine passende Hülse an der Entnahmestelle befindet, wird die Bewegung des Transportelements wieder gestoppt. Die übrigen Transportelemente des Hülsenmagazins können dabei stillstehen. Diese Art der Ansteuerung ist möglich, wenn jedem Transportelement ein eigener Motor zugeordnet ist, oder wenn die Transportelemente mit eigenen Kupplungen an einer Antriebswelle angeordnet sind und die Kupplungen bei Bedarf eine Verbindung des Transportelements mit der Antriebswelle schaffen.

Ebenso ist es vorteilhaft, wenn die Entnahmeeinrichtung betätigt wird, wenn die Position der Hülse an der Entnahmestelle sensorisch erfasst wurde. Es kann hierfür zumindest ein Sensor vorgesehen sein, welcher die aktuelle bzw. korrekte Position der Hülse oder des Halters ermittelt und ein entsprechendes Signal an die Steuerung bzw. den Antrieb des Transportelements weitergibt, um die Hülse an der Entnahmestelle stoppen zu können. Die Entnahmeeinrichtung kann anschließend betätigt werden, um die Hülse von dem Halter zu entnehmen.

Auch ist es äußert vorteilhaft, wenn die Entnahmeeinrichtung die Hülse von dem Halter schiebt. Dabei muss die Hülse nicht exakt gegriffen werden. Sie wird vielmehr an ihrer Stirnseite erfasst und entlang des Halters aus dem Transportelement geschoben. Besonders vorteilhaft ist es hierfür, wenn die Hülse in einer Schale oder auf einem Hülsendorn gehalten wird. Insbesondere hat sich hierbei ein Hülsendorn bewährt, welcher an seinem freien Ende einen Haken aufweist, mit dem die Hülse zumindest teilweise an dem Halter gehalten werden kann und davor gesichert ist, dass sie an einem nicht gewünschten Ort aus dem Halter fällt.

Ein erfindungsgemäßes Hülsenmagazin einer Textilmaschine weist ein Transportelement auf. Das Transportelement umfasst eine Vielzahl daran angeordneter Halter für die Aufnahme von Hülsen. Das Transportelement wird mit einem ihm zugeordneten Antrieb angetrieben. An einer Entnahmestelle, können Hülsen des Transportelementes von dem Halter abgenommen werden. Hierfür ist das Transportelement derart in dem Hülsenmagazin geführt, dass die Halter des Transportelements in den Bereich der Entnahmestelle gefördert werden. An der Entnahmestelle ist eine Entnahmeeinrichtung angeordnet, mit welcher die Hülsen von dem Halter entnommen und beispielsweise einer Fördereinrichtung der Textilmaschine übergeben werden können.

Erfindungsgemäß sind in dem Hülsenmagazin mehrere Transportelemente angeordnet. Auf jedem Transportelement können gleichartige Hülsen gespeichert werden. Damit ist es möglich, dass in dem Hülsenmagazin unterschiedliche Arten von Hülsen aufbewahrt werden und bei Bedarf eine vorbestimmte Hülsenart der Entnahmestelle zugeführt und von der Entnahmeeinrichtung aus dem Hülsenmagazin entnommen werden kann.

Das Hülsenmagazin weist dementsprechend erfindungsgemäß eine Steuerung auf, die so ausgebildet ist, dass sie die einzelnen Transportelemente derart ansteuert, dass ein Halter zumindest eines der Transportelemente mit einer Hülse an die Entnahmestelle bewegt wird. Die Entnahmeeinrichtung wird für die Entnahme der Hülse von dem Halter dann betätigt, wenn sich der Halter des zumindest einen Transportelements mit seiner Hülse an der Entnahmestelle befindet, während sich die Halter der anderen Transportelemente außerhalb der Entnahmestelle befinden. Es kann damit eine Auswahl getroffen werden, welche Art von Hülse oder wie viele Hülsen sich an der Entnahmestelle befinden sollen und durch die Entnahmeeinrichtung aus dem Hülsenmagazin entfernt werden. Die Entnahmeeinrichtung entnimmt damit aus einem oder mehreren der entsprechenden Transportelemente die der Entnahmestelle zugeführten Hülsen. In dem Hülsenmagazin können somit unterschiedliche Arten gespeichert werden und je nach Bedarf die benötigte Hülse alleine oder zusammen mit anderen Hülsen entnommen werden.

Vorteilhaft ist es, wenn die Entnahmeeinrichtung für die Entnahme von Hülsen mehrerer der Transportelemente ausgebildet ist. Es ist damit nur eine Entnahmeeinrichtung, vorzugsweise für das gesamte Hülsenmagazin, erforderlich. Damit kann ein ganz besonders kostengünstiges Hülsenmagazin geschaffen werden.

Ebenso bringt es Vorteile mit sich, wenn die Entnahmestellen der Transportelemente benachbart zueinander angeordnet sind. Die Entnahmeeinrichtung kann damit einfach ausgestaltet werden und die Ansteuerung der Entnahmeeinrichtung für die Entnahme der Hülsen von den Haltern aller Transportelemente kann konstruktiv einfach gelöst werden.

Vorteile bringt es zudem mit sich, wenn die Entnahmeeinrichtung ein Schieber ist. Mit einem Schieber kann die Hülse sehr einfach von dem Halter entnommen werden. Der Schieber kontaktiert die Hülse an ihrer Stirnseite und bewegt sie entlang des Halters aus dem Transportelement.

Des Weiteren ist es vorteilhaft, wenn die Entnahmeeinrichtung pneumatisch oder elektrisch angetrieben ist. Insbesondere ein pneumatischer Antrieb für die Entnahmeeinrichtung ist besonders vorteilhaft, da auch die Bewegung, vor allem mittels eines Schiebers damit konstruktiv einfach bewerkstelligt werden kann. Auch mit einem elektrischen Motor kann beispielsweise durch eine Drehbewegung des Schiebers die Entnahme der Hülse von dem Halter erfolgen. Beide Antriebsarten sind selbstverständlich auch einsetzbar, wenn die Hülse nicht mittels eines Schiebers, sondern beispielsweise mittels eines Greifers von dem Halter entnommen wird.

Besonders vorteilhaft ist es, wenn den Transportelementen Sensoren zugeordnet sind, um die Position der Hülse an der Entnahmestelle sensorisch erfassen zu können. Die Sensoren können entweder auf den Halter gerichtet sein und feststellen, ob sich an dem Halter eine Hülse befindet oder ob der Halter leer ist. Die Sensoren können darüber hinaus feststellen, ob sich ein Halter mit einer Hülse im Bereich der Entnahmestelle befindet. Mit diesen entsprechenden Signalen werden die Transportelemente gesteuert, sodass nur die vorbestimmte Hülse sich im Bereich der Entnahmestelle befindet und aus dem Transportelement entnommen werden kann. In der Regel werden die anderen Transportelemente derart angesteuert, dass die Sensoren ein entsprechendes Signal abgeben, mit welchem festgestellt wird, dass sich die Hülsen dieser anderen Transportelemente nicht im Bereich der Entnahmestelle befinden. Auf diese Weise wird nur die vorbestimmte Hülse und nicht die anderen Hülsen, die sich auf den anderen Transportelementen befinden, aus dem Hülsenmagazin entfernt.

Auch ist es von Vorteil, wenn die Transportelemente benachbart zueinander angeordnet sind. Durch die benachbarte Anordnung der Transportelemente ist sowohl die Zuführung als auch die Entnahme der Hülsen besonders einfach durchzuführen.

Vorteilhaft ist es, wenn jedes Transportelement einen eigenen Antrieb, beispielsweise einen eigenen Motor aufweist. Weist jedes Transportelement einen eigenen Antrieb auf, so ist die Ansteuerung der Transportelemente sehr einfach durchzuführen. Der Motor des Transportelements wird betätigt, wenn das Transportelement eine Hülse an die Entnahmestelle bewegen soll. Alternativ können beispielsweise die Transportelemente an eine einzige Antriebswelle gekoppelt sein. Die Bewegung des entsprechenden Transportelements wird dann mittels Kupplungen ein- und ausgeschaltet werden.

Vorteilhaft ist es zudem, wenn die Halter Stifte zum Aufstecken oder Auflagen zum Auflegen von Hülsen sind. Die Hülsen können auf den Stiften sehr einfach aufgesteckt werden und auch wieder mit der Entnahmeeinrichtung von dem jeweiligen Stift entnommen werden. Vorzugsweise weisen die Stifte an ihren freien Enden Haken auf, mit welchen verhindert wird, dass die Hülsen versehentlich von den Stiften fallen. Sind die Haken einseitig ausgebildet, so kann vorgesehen sein, dass sie im Bereich der Entnahmestelle ein glattes Schieben der Hülsen über die Stifte ermöglichen, während sie in anderen Bereichen das selbstständige Entfernen der Hülsen von den Stiften verhindern. Die Auflagen können alternativ bei bestimmten Hülsen vorteilhaft sein, welche beispielsweise wegen einer ausgeprägten Bördelung nicht so einfach auf Stiften befestigt oder von diesen entnommen werden können.

Vorteile bringt es zudem mit sich, wenn das Transportelement ein flexibles, quer oder längs der Maschinenausrichtung angeordnetes, umlaufendes Zugmittel, insbesondere eine Kette, ein Seil oder ein Band, ist. Mit diesem flexiblen Zugmittel kann das Transportelement platzsparend in dem Hülsenmagazin geführt werden.

Ebenso bringt es Vorteile mit sich, wenn das Transportelement oval- oder mäanderförmig geführt ist. Durch die oval- oder mäanderförmige Führung des Transportelements ist es möglich, dass eine große Anzahl von Hülsen auf einer geringen Fläche in dem Hülsenmagazin gespeichert wird.

Besondere Vorteile bringt es mit sich, wenn das Hülsenmagazin modulartig ausgebildet ist und mehrere Transportelemente in Längs- und/oder Querrichtung der Maschine verlaufend, als jeweils einzelne Module nebeneinander angeordnet sind. Damit ist es möglich, dass je nach Anforderungen der Textilmaschine mehr oder weniger Hülsen gespeichert werden können, indem mehr oder weniger Module mit Transportelemente nebeneinander angeordnet werden. Insbesondere wenn eine große Vielfalt an Hülsen benötigt wird, ist es vorteilhaft, wenn mehr Transportelemente in dem Hülsenmagazin angeordnet sind. Wenn in einem anderen Fall nur ein geringer Platz zur Verfügung steht, um die Textilmaschine mit ihrem Hülsenmagazin aufstellen zu können, kann es vorteilhaft sein, wenige Transportelemente in dem Hülsenmagazin anzuordnen und damit das Hülsenmagazin kleiner ausführen zu können.

Weitere Vorteile der Erfindung sind in den nachfolgenden Ausführungsbeispielen beschrieben. Es zeigt:
- **Figur** 1: eine Draufsicht auf eine Textilmaschine mit mehreren Hülsenmagazinen,
- **Figur** 2: eine Frontansicht einer Textilmaschine mit einem Hülsenmagazin,
- **Figur** 3: eine Seitenansicht einer Textilmaschine mit mehreren Hülsenmagazinen,
- **Figur 4a**: eine Draufsicht auf ein Hülsenmagazin bei der Entnahme einer Hülse,
- **Figur 4b**: eine schematische Frontansicht auf eine Entnahmestelle eines Hülsenmagazins bei der Entnahme einer Hülse und
- **Figur 5**: eine Frontansicht einer Textilmaschine mit einem alternativen Hülsenmagazin.

Bei der nachfolgenden Beschreibung der dargestellten alternativen Ausführungsbeispiele werden für Merkmale, die im Vergleich zu den dargestellten anderen Ausführungsbeispielen in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der vorstehend bereits beschriebenen Merkmale. Die im folgenden verwendeten Begriffe "Motor" und "Antrieb" können jeweils sowohl einen einzelnen Motor als auch ein damit verbundenes Getriebe umfassen.

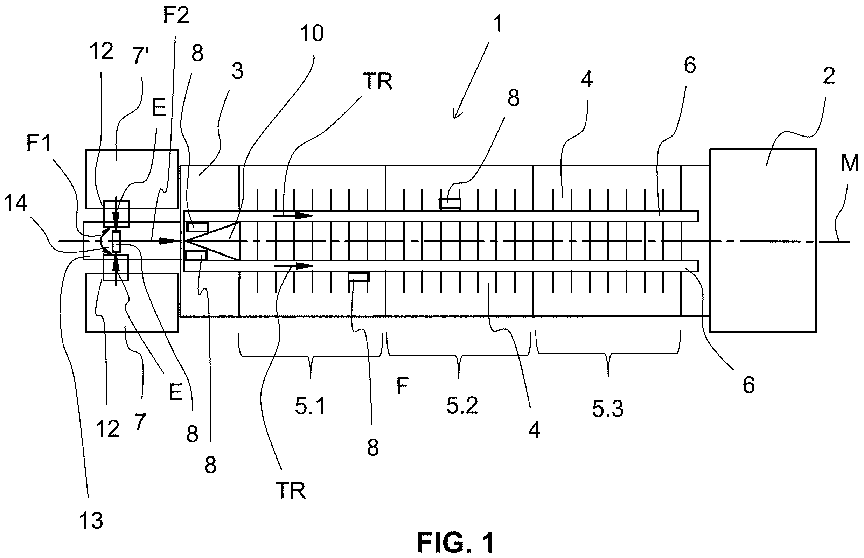

In Figur 1 ist eine Draufsicht auf eine skizziert dargestellte Textilmaschine 1, beispielsweise eine Offenend-Rotorspinnmaschine oder eine Spulmaschine, dargestellt. Die Textilmaschine 1 weist ein Triebgestell 2 und ein Endgestell 3 auf, welche jeweils am Ende der Textilmaschine 1 angeordnet sind. Die Textilmaschine 1 weist in Längsrichtung zwei Maschinenseiten auf, an welchen eine Vielzahl von Arbeitsstellen 4 zwischen dem Triebgestell 2 und dem Endgestell 3 angeordnet sind. Aus Übersichtlichkeitsgründen sind nur wenige der Arbeitsstellen 4 mit einem Bezugszeichen versehen. Arbeitsstellen 4 können je nach Art der Textilmaschine 1 Spinnstellen, beispielsweise Rotor-, Luft- oder Ringspinnstellen oder Spulstellen von Spulmaschinen sein. Die Vielzahl der Arbeitsstellen 4 ist in Sektionen 5.1 bis 5.3 zusammengefasst. In diesem Ausführungsbeispiel sind in jeder Sektion 5.1 bis 5.3 und auf jeder Maschinenseite acht Arbeitsstellen 4 angeordnet. Es können aber auch mehr oder weniger Arbeitsstellen pro Sektion sein. In jeder der Arbeitsstellen 4 ist ein nicht dargestellter Spularm für eine Hülse 8 vorgesehen, auf welche ein Garn kreuzweise aufgespult wird. Je nach Garnart wird eine unterschiedliche Hülsenart benötigt. Dies ist erforderlich oder zumindest hilfreich um die Garnart, die sich auf der Hülse befindet, später, wenn sich die Spule nicht mehr an der Arbeitsstelle 4 befindet, wieder leichter identifizieren zu können.

Entlang der Vielzahl der Arbeitsstellen 4 ist an jeder Seite der Textilmaschine 1 eine Hülsentransportvorrichtung 6 angeordnet. Die Hülsentransportvorrichtung 6 ist im vorliegenden Ausführungsbeispiel als Transportband ausgebildet, auf welches Hülsen 8 gelegt und an ein vorbestimmtes Ziel transportiert werden. Die Hülsen befinden sich in einer großen Anzahl in zwei Hülsenmagazinen 7 und 7', von denen in diesem Ausführungsbeispiel jedes einer Maschinenseite zugeordnet ist. Die beiden Hülsenmagazine 7 und 7' sind in Maschinenlängsachse M ausgerichtet. Hierdurch schmiegen sie sich eng an die Textilmaschine 1 an und benötigen dadurch nur wenig Bauraum.

Die Hülsentransportvorrichtung 6 hat in dem vorliegenden Ausführungsbeispiel eine einzige Transportrichtung in Pfeilrichtung TR. Dies bedeutet, dass die Hülsen aus den Hülsenmagazinen 7, 7' entnommen, der jeweiligen Hülsentransportvorrichtung 6 übergeben und von dieser in Pfeilrichtung TR bewegt werden. Entlang der Hülsentransportvorrichtung 6 können Hülsenspeicher angeordnet sein, in die leere Hülsen 8 eingelegt werden können und dort auf die Übernahme von der einzelnen Arbeitsstelle 4 warten. Je nach Garnart an der entsprechenden Arbeitsstelle 4 wird eine Hülsenart angefordert.

Zwischen den Hülsenmagazinen 7, 7' und der Sektion 5.1 ist das Endgestell 3 angeordnet. Auf dem Endgestell 3 befindet sich eine Übergabeeinrichtung 10, welche Hülsen auf die Hülsentransportvorrichtung 6 bewegt. Dies ist schematisch mit einem Keil angedeutet. Die Übergabe kann dadurch erfolgen, dass die Hülsen 8 von der Übergabeeinrichtung 10 auf die Hülsentransportvorrichtung 6 gerollt oder gehoben werden.

Damit die Hülsen 8 in die Übergabeeinrichtung 10 gelangen können, müssen sie zuvor aus dem entsprechenden Hülsenmagazin 7, 7' entnommen werden. Hierfür sind Entnahmeeinrichtungen 12 vorgesehen, welche in diesem Ausführungsbeispiel jedem einzelnen Hülsenmagazin 7, 7' zugeordnet sind. Die Hülsen 8 werden entsprechend den Pfeilen E aus den Hülsenmagazinen 7, 7' in Richtung zur Maschinenlängsachse M, zwischen die auf beiden Seiten der Maschine 1 angeordneten Hülsenmagazine 7, 7' bewegt und dabei aus den Hülsenmagazinen 7, 7' entnommen und auf eine Fördereinrichtung 13 aufgelegt. Dort werden Sie zu einer Dreheinrichtung 14 bewegt. An der Dreheinrichtung 14 wird die Orientierung der Hülse 8 entsprechend dem Pfeil F1 bei Bedarf korrigiert. Die Dreheinrichtung 14 dreht die Hülse 8 entsprechend der gewünschten Orientierung der Hülse 8. D.h., dass je nachdem ob die Hülse 8 für die linke oder die rechte Seite der Textilmaschine 1 vorgesehen ist, um 90° nach links oder um 90° nach rechts gedreht wird. Die nun richtig orientierte Hülse 8 wird entsprechend Pfeil F2 auf der Fördereinrichtung 13 weiter zu der Übergabevorrichtung 10 bewegt und an die entsprechende Hülsentransportvorrichtung 6 übergeben.

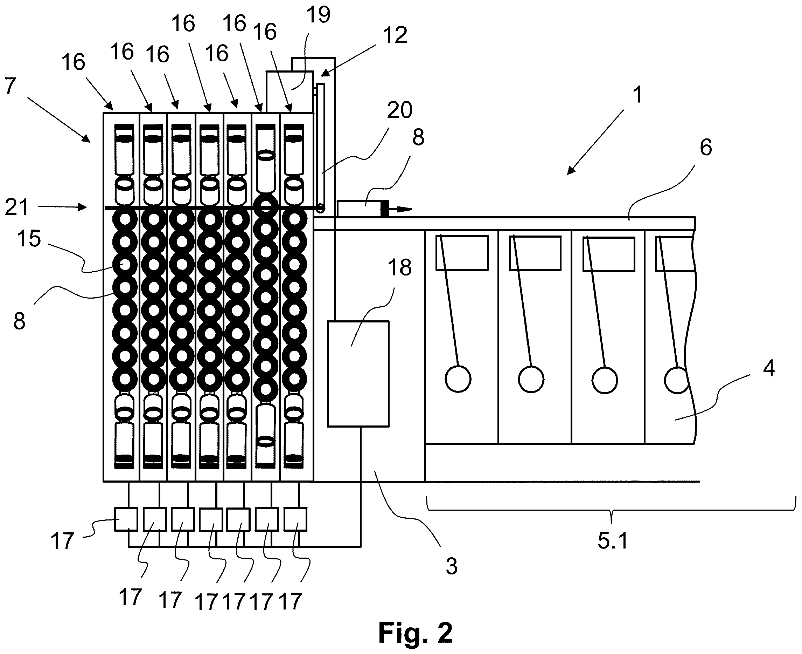

Figur 2 zeigt einen Ausschnitt einer Frontansicht der Textilmaschine 1 mit einem Hülsenmagazin 7. Zwischen dem Hülsenmagazin 7 und den Arbeitsstellen 4 ist das Endgestell 3 angeordnet. Die Hülse 8 wird mit der Hülsentransportvorrichtung 6 von dem Hülsenmagazin 7 zu der anfordernden Arbeitsstelle 4 transportiert. In dem Hülsenmagazin 7 sind sieben nebeneinander angeordnete Transportelemente 16 mit jeweils einer Vielzahl von Haltern 15 angeordnet, auf welchen die Hülsen 8 aufgesteckt sind. Die Transportelemente 16 sind, senkrecht zur Zeichenebene gesehen, ovalförmig angeordnet. Die Bewegung der Transportelemente 16 erfolgt unabhängig voneinander. Hierfür ist jedem Transportelement 16 ein eigener Motor 17, oder alternativ eine nicht gezeigte Kupplung einer Antriebswelle, zugeordnet.

Jeder Motor 17 bzw. jede Kupplung ist mit einer Steuerung 18 verbunden. Die Steuerung 18 bewirkt, dass zumindest einer der Motoren 17 in Gang gesetzt wird, oder die Kupplung geschlossen wird, wodurch das entsprechende Transportelement 16 bewegt und die daran angeordneten Hülsen 8 in dem Hülsenmagazin 7 umlaufend transportiert werden. Mit der Steuerung 18 ist ebenfalls eine Entnahmeeinrichtung 12 verbunden. Die Entnahmeeinrichtung 12 umfasst einen Antrieb 19. Der Antrieb 19 betreibt einen Schieber 20, der im Bereich einer Entnahmestelle 21 angeordnet ist. Die Entnahmestelle 21 ist allen Transportelementen 16 zugeordnet. Jedes Transportelement 16 ist in der Lage, eine ihrer Hülsen 8 der Entnahmestelle 21 zuzustellen.

Wenn mittels der Steuerung 18 zumindest eines der Transportelemente 16 in einer Position angehalten wird, in welcher sich eine Hülse 8 im Eingriff des Schiebers 20 an der Entnahmestelle 21 befindet, wird der Antrieb 19 und damit der Schieber 20 tätigt. Durch diese Betätigung streift der Schieber 20 die Hülse 8 von ihrem Halter 15 und führt sie damit der Fördereinrichtung 13 (siehe Figur 1) zu. Die Hülse 8 kann anschließend gedreht und der Hülsentransportvorrichtung 6 übergeben werden. Nachdem die Position der anderen Transportelemente 16 so ist, dass sich keine der Hülsen 8 im Eingriffsbereich des Schiebers 20 befindet, verbleiben diese Hülsen 8 auf ihren Haltern 15 der jeweiligen Transportelemente 16. Auf diese Weise ist es möglich, dass gezielt Hülsen 8 von vorbestimmten Transportelementen 16 in die Fördereinrichtung 13 übergeben werden. Wurden die einzelnen Transportelemente 16 mit unterschiedlichen Arten von Hülsen 8 jeweils sortenrein befüllt, so ist es sehr einfach möglich, eine bestimmte Art von Hülse aus dem Hülsenmagazin 7 zu entnehmen, da lediglich die Transportelemente 16 angesteuert werden müssen, welche die entsprechende Hülsenart aufweisen.

Das Hülsenmagazin 7 ist modulartig aufgebaut, so dass je nach Bedarf der Textilmaschine 1 mehr oder weniger solcher Transportelemente 16 in dem Hülsenmagazin 7 aneinandergereiht sind. Nachdem der Platzbedarf in Maschinenlängsachse M gering ist, weil die Achsen der Hülsen 8 quer zur Maschinenlängsachse M ausgerichtet sind, ist auch der gesamte Platzbedarf des Hülsenmagazins 7 gering und es können ohne wesentlichen zusätzlichen Platzbedarf weitere Transportelemente 16 angeordnet werden.

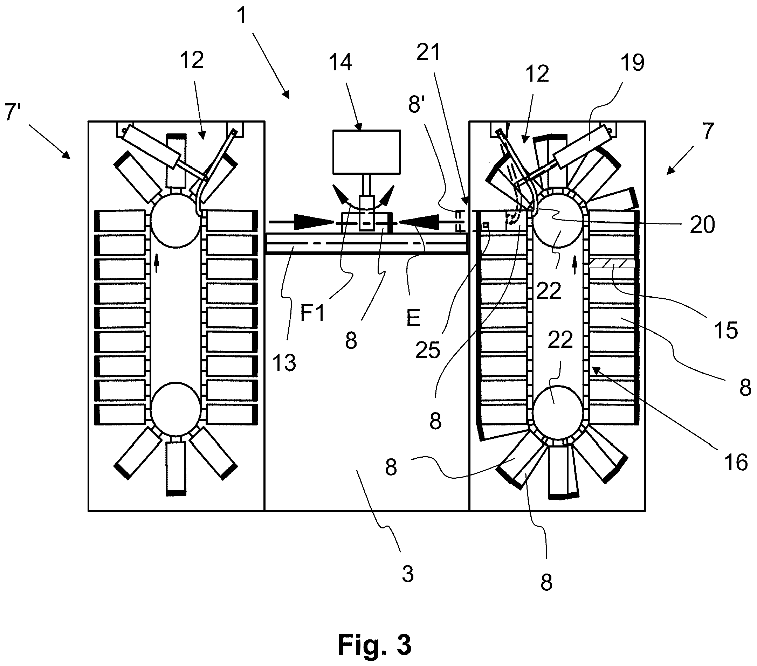

In Figur 3 ist eine Ansicht auf die Stirnseite der Textilmaschine 1 im Bereich des Endgestells 3 dargestellt. Seitlich des Endgestells 3 sind die Hülsenmagazine 7 und 7' angeordnet, von denen das Hülsenmagazin 7 im Folgenden detaillierter beschrieben ist. Jedes dieser Hülsenmagazine 7 und 7' weist Halter 15 für eine Vielzahl von Hülsen 8 auf. In Figur 3 ist exemplarisch ein Halter 15 schraffiert angedeutet. Die Hülsen 8 sind dabei auf die Halter 15, hier Stifte, aufgeschoben. Eine Vielzahl der Halter 15 ist an dem flexiblen, quer der Maschinenlängsachse M angeordneten, umlaufenden Transportelement 16 befestigt, welches um Umlenkungen 22 geführt wird. Die hier nicht dargestellten Motoren 17, welche beispielsweise jeweils eine der Umlenkungen 22 antreiben, bewirken eine Bewegung der Transportelemente 16 mit ihren Haltern 15 und den darauf aufgesteckten Hülsen 8. Die Transportelemente 16 sind ovalförmig in dem jeweiligen Hülsenmagazin 7 bzw. 7' angeordnet.

Die Hülsen 8 werden an der Entnahmeeinrichtung 12 und der Entnahmestelle 21 vorbei bewegt oder können dort entsprechend gestoppt werden. Wenn sich eine Hülse 8 im Bereich der Entnahmeeinrichtung 12 befindet, kann sie entsprechend Pfeil E aus dem Hülsenmagazin 7 bzw. 7' auf die Fördereinrichtung 13 bewegt werden. Die Fördereinrichtung 13 fördert die Hülse 8 in den Bereich der Dreheinrichtung 14, in welcher die Hülse 8 um 90° gedreht wird. Damit ist die Hülse 8 nicht mehr quer zur Maschinenlängsachse M, sondern parallel hierzu ausgerichtet. Die Entscheidung, ob die Hülse 8 um 90° nach links oder um 90° nach rechts gedreht wird, hängt davon ab, ob die Hülse 8 für die linke oder für die rechte Maschinenseite benötigt wird. Wie aus Figur 1 zu sehen ist, ist die Orientierung der Hülsen 8 nämlich auf den einzelnen Maschinenseiten um 180° gedreht.

In dem hier dargestellten Ausführungsbeispiel umfasst die Entnahmeeinrichtung 12 einem pneumatischen Antrieb 19, welcher mit einem drehbar gelagerten Schieber 20 zusammenwirkt. Die in dieser Darstellung hintereinander angeordneten Transportelemente 16 sind dabei so angesteuert, dass sie um etwa einen halben Hülsendurchmesser versetzt positioniert sind. Hierdurch ist es möglich, dass bei einem Auslenken des Schiebers 20 durch den pneumatischen Antrieb 19 nur solche Hülsen 8 von ihrem Halter 15 geschoben werden, welche sich im Eingriff des Schiebers 20 befinden. Andere Hülsen 8, von anderen Transportelementen 16 des Hülsenmagazins 7, welche hierzu um etwa einen halben Hülsendurchmesser versetzt positioniert sind, werden von dem Schieber 20 nicht erreicht und bleiben deshalb auf ihrem Halter 15. Auf diese Weise kann durch die Steuerung 18 gezielt bestimmt werden, von welchen Transportelementen 16 Hülsen 8 entnommen werden sollen. Das Transportelement 16, von welchem eine Hülse 8 entnommen werden soll, wird dementsprechend so gestoppt, dass sich eine Hülse 8 im Eingriff des Schiebers 20 befindet, während die Transportelemente 16, deren Hülsen 8 auf ihren Haltern 15 verbleiben sollen, so gestoppt werden, dass deren Hülsen 8 nicht in den Eingriff des Schiebers 20 gelangen. Wenn der Schieber 20 gleichzeitig alle oder zumindest mehrere der Transportelemente 16 erreichen kann, so ist die Bewegung der Entnahmeeinrichtung 12 bei einer Entnahme einer Hülse 8 aus dem Hülsenmagazin 7 stets dieselbe. Lediglich die Positionierung der Transportelemente 16 bestimmt, welche Hülse 8 aus dem Hülsenmagazin 7 entnommen wird.

Um feststellen zu können, ob sich eine Hülse 8 in einer geeigneten Position im Bereich der Entnahmestelle 21 für die Entnahme aus dem Hülsenmagazin 7 befindet, kann ein Sensor 25 vorgesehen sein, welcher erfasst, ob eine Hülse 8 an der Entnahmestelle 21 vorhanden ist. Der Sensor 25 gibt ein entsprechendes Signal an die Steuerung 18, wodurch diese erkennt, dass entweder eine Hülse 8 eines nicht gewünschten Transportelements 16 an der Entnahmestelle 21 vorhanden ist, dementsprechend dieses Transportelement 16 ein Stück weiter angetrieben werden muss, oder es wird festgestellt, dass sich ein leerer Halter 15 an der Entnahmestelle 21 befindet, wodurch ebenfalls das entsprechende Transportelement 16 weiter angetrieben werden muss. Erst wenn der Sensor 25 feststellt, dass das gewünschte Transportelement 16 an der Entnahmestelle 21 eine Hülse 8 aufweist, bleibt das entsprechende Transportelement 16 stehen. Die Hülse 8 kann sodann entnommen werden.

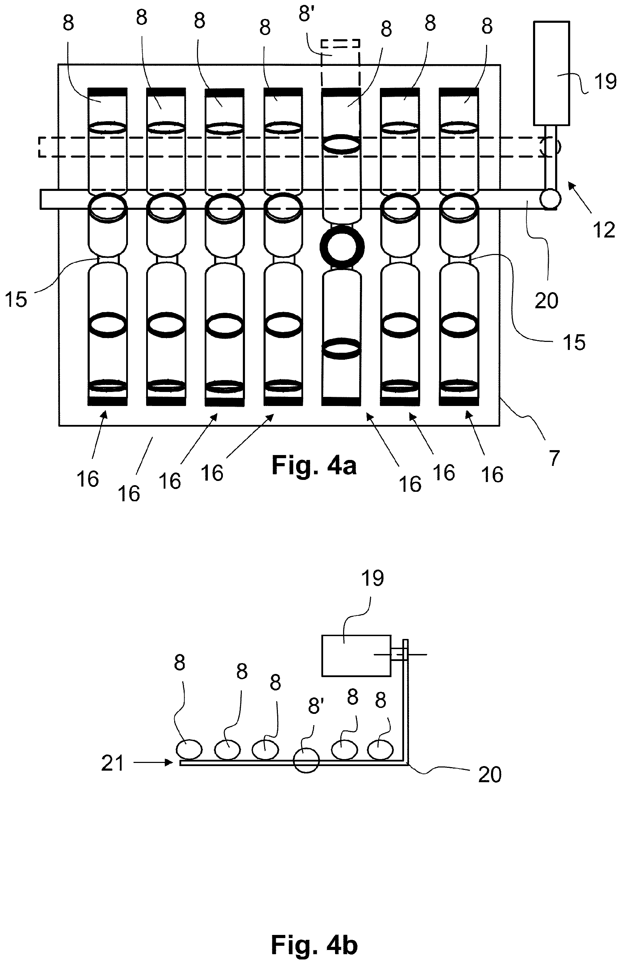

Figur 4a zeigt eine Draufsicht auf das Hülsenmagazin 7 der Figur 3 bei der Entnahme einer Hülse 8. In dem Hülsenmagazin 7 sind nebeneinander sieben Transportelemente 16 angeordnet. An jedem der Transportelemente 16 ist eine Vielzahl von Hülsen 8 an Haltern 15 befestigt. Die Entnahmeeinrichtung 12 zeigt den pneumatischen Antrieb 19. An dem pneumatischen Antrieb 19 ist der Schieber 20 angeordnet. Das dritte Transportelement 16 von rechts ist im Gegensatz zu den übrigen Transportelementen 16 um etwa einen halben Hülsendurchmesser versetzt zu den übrigen Transportelementen 16 gestoppt. Hierdurch kann der Schieber 20, wenn er von dem Antrieb 19 in Bewegung versetzt wird, eine der Hülsen 8 ergreifen und von dem Halter 15 schieben. Dies ist durch die gestrichelte Darstellung des Schiebers 20 und der entnommenen Hülse 8' dargestellt. Durch eine entsprechende Bewegung der Transportelemente 16 und das Stoppen des Transportelements 16 dessen Hülse 8 entnommen werden soll, kann gezielt die Entnahme vorbestimmter Hülsen 8 aus dem Hülsenmagazin 7 erfolgen.

Figur 4b zeigt entsprechend der Figur 4a eine schematische Frontansicht auf eine Entnahmestelle 21 des Hülsenmagazins 7 bei der Entnahme einer Hülse 8'. Diese schematische Darstellung soll das Funktionsprinzip noch besser verdeutlichen. Wie daraus ersichtlich ist, ist nur eine einzige Hülse 8' im Eingangsbereich des Schiebers 20 an der Entnahmestelle 21. Der Antrieb 19 schwingt in diesem Fall den Schieber 20. In der Schwenkbewegung des Schiebers 20 befindet sich lediglich die Hülse 8', welche etwa um einen halben Hülsendurchmesser versetzt zu den übrigen Hülsen 8 gestoppt wurde. Hierdurch wird lediglich die Hülse 8' aus dem Hülsenmagazin 7 befördert.

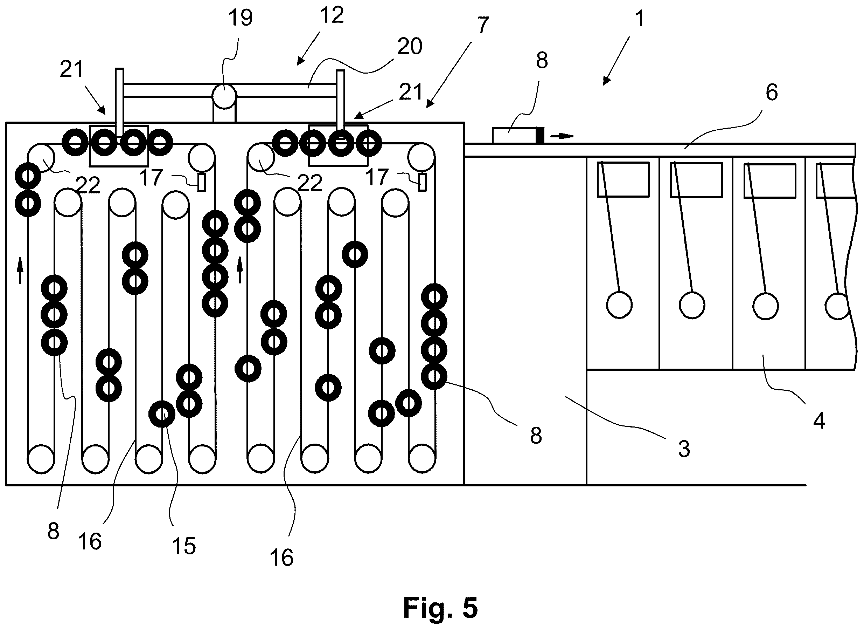

Figur 5 zeigt eine Frontansicht einer Textilmaschine 1 mit einem alternativen Hülsenmagazin 7. Die Darstellung ist ähnlich der Ausführung gemäß Figur 2. Auch hier ist eine teilweise Seitenansicht der Textilmaschine 1 zu sehen. Im Anschluss an das Endgestell 3 ist ein Hülsenmagazin 7 angeordnet, in welchem zwei Transportelemente 16 vorhanden sind. Jedes Transportelement 16 bildet ein Modul, ist längs der Maschinenlängsachse M angeordnet und ist mäanderförmig mit Umlenkungen 22 mehrfach umgelenkt. Es wird somit ein platzsparender Aufbau für die Magazinierung der Hülsen 8 geschaffen. Jedes der Transportelemente 16 ist mit einem Motor 17 derart angetrieben, dass es in einer (siehe Pfeilrichtung) oder auch in beiden Richtungen bewegbar ist. Zur Entnahme einer Hülse 8 aus dem Transportelement 16 bzw. einem daran angeordneten Halter 15 oder einer Ablageschale, in welcher die Hülse 8 liegt, ist eine Entnahmeeinrichtung 12 vorgesehen. Die Hülse 8 wird mittels der Entnahmeeinrichtung 12 aus dem Halter 15 des Transportelements 16 entfernt und der Hülsentransportvorrichtung 6 zugeführt. Das Entfernen der Hülse 8 aus dem Halter 15 des Transportelements 16 erfolgt derart, dass die Entnahmeeinrichtung 12 die Hülse 8 mit Hilfe des Schiebers 20 von dem Halter 15 abzieht und auf die Hülsentransportvorrichtung 6 bewegt. Dies kann - ebenso bei den anderen Ausführungsbeispielen - direkt erfolgen, es können aber auch andere Einrichtungen, wie oben beschrieben, dazwischengeschaltet sein. Die Entnahme der Hülse 8 aus dem Halter 15 erfolgt nach demselben Prinzip, wie oben beschrieben. Auch hier wird das Transportelement 16, aus welchem eine Hülse 8 entnommen werden soll, um etwa einen halben Hülsendurchmesser versetzt zum anderen Transportelement 16 gestoppt. Hierdurch gerät nur eine Hülse 8 in den Eingriffsbereich des Schiebers 20. Bei einer Betätigung des Antriebs 19 bewegt sich der Schieber 20 und schiebt dabei nur diejenige Hülse 8 von ihrem Halter 15, die sich im Eingriff des Schiebers 20 befindet. So kann auch hier mit einer einfachen Entnahmeeinrichtung 12 und einer entsprechenden Steuerung der Motoren 17 der Transporteinrichtungen 16 gezielt eine bestimmte Hülse 8 aus dem Hülsenmagazin 7 entnommen werden.

Durch die Verwendung von zwei Transportelementen 16 kann bereits ein Vorsortieren unterschiedlicher Hülsenarten stattfinden. So kann auf jedem Transportelement 16 eine bestimmte Hülsenart magaziniert sein. Es ist somit für das Bedienungspersonal sehr einfach festzustellen, welche Hülsenart in dem Magazin 7 bzw. in dem jeweiligen Transportelement 16 nachzufüllen ist. Außerdem ist es für die Steuerung der Textilmaschine 1 sehr einfach möglich bei einer Anforderung einer bestimmten Hülsenart das entsprechende Transportelement 16 anzusprechen und die Hülse 8 daraus zu entnehmen.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Textilmaschine
- 2: Triebgestell
- 3: Endgestell
- 4: Arbeitsstelle
- 5: Sektion
- 6: Hülsentransportvorrichtung
- 7: Hülsenmagazin
- 8: Hülsen
- 10: Übergabeeinrichtung
- 12: Entnahmeeinrichtung
- 13: Fördereinrichtung
- 14: Dreheinrichtung
- 15: Halter
- 16: Transportelement
- 17: Motor
- 18: Steuerung
- 19: Antrieb
- 20: Schieber
- 21: Entnahmestelle
- 22: Umlenkung
- 25: Sensor
- M: Maschinenlängsachse
- TR: Transportrichtung
- E: Entnahmerichtung
- F1: Drehrichtung
- F2: Förderrichtung

## Patentansprüche

1. Verfahren zum Entnehmen von einzelnen Hülsen (8) aus einem Hülsenmagazin (7) einer Textilmaschine (1), wobei
- das Hülsenmagazin (7) ein Transportelement (16) mit einer Vielzahl von Haltern (15) aufweist, von denen jeder eine Hülse (8) halten kann,
- das Transportelement (16) angetrieben wird, um einen Halter (15) mit einer Hülse (8) zu einer Entnahmestelle (21) des Hülsenmagazins (7) zu bewegen,
- an der Entnahmestelle (21) eine Entnahmeeinrichtung (12) angeordnet ist, um die Hülse (8) von dem Halter (15) zu nehmen,
**dadurch gekennzeichnet,**
**dass** in dem Hülsenmagazin (7) mehrere Transportelemente (16) angeordnet werden und
**dass** durch eine Steuerung (18)
- die einzelnen Transportelemente (16) derart angesteuert werden, dass ein Halter (15) zumindest eines der Transportelemente (16) mit einer Hülse (8) an die Entnahmestelle (21) bewegt wird und
- die Entnahmeeinrichtung (12) für die Entnahme der Hülse (8) von dem Halter (15) dann betätigt wird, wenn sich der Halter (15) des zumindest einen Transportelements (16) mit seiner Hülse (8) an der Entnahmestelle (21) befindet, während sich die Halter (15) der anderen Transportelemente (16) außerhalb der Entnahmestelle (21) befinden.

2. Verfahren gemäß dem vorherigen Anspruch, **dadurch gekennzeichnet, dass** die Entnahmeeinrichtung (12) Hülsen (8) von mehreren Transportelementen (16) entnehmen, vorzugsweise von einem Halter (15) schieben kann.

3. Verfahren gemäß einem oder mehreren der vorherigen Ansprüche, **dadurch gekennzeichnet, dass** zumindest ein vorbestimmtes Transportelement (16) angesteuert wird, um den Halter (15) mit einer Hülse (8) an die Entnahmestelle (21) der Entnahmeeinrichtung (12) zu bewegen.

4. Verfahren gemäß einem oder mehreren der vorherigen Ansprüche, **dadurch gekennzeichnet, dass** die Entnahmeeinrichtung (12) betätigt wird, wenn die Position der Hülse (8) an der Entnahmestelle (21) sensorisch erfasst wurde.

5. Hülsenmagazin einer Textilmaschine (1) mit einem Transportelement (16),
wobei das Transportelement (16) eine Vielzahl daran angeordneter Halter (15) für die Aufnahme von Hülsen (8) aufweist und
dem Transportelement (16) ein Motor (17) zugeordnet ist, sowie mit einer Entnahmestelle (21), an welcher Hülsen (8) des Transportelementes (16) von dem Halter (15) abgenommen werden können und
wobei an der Entnahmestelle (21) eine Entnahmeeinrichtung (12) angeordnet ist,
**dadurch gekennzeichnet,**
- **dass** in dem Hülsenmagazin (7) mehrere Transportelemente (16) angeordnet sind und
- **dass** das Hülsenmagazin (7) eine Steuerung (18) aufweist, die so ausgebildet ist,
- **dass** sie die einzelnen Transportelemente (16) derart ansteuert, dass ein Halter (15) zumindest eines der Transportelemente (16) mit einer Hülse (8) an die Entnahmestelle (21) bewegt wird und
- **dass** die Entnahmeeinrichtung (12) für die Entnahme der Hülse (8) von dem Halter (15) dann betätigt wird, wenn sich der Halter (15) des zumindest einen Transportelements (16) mit seiner Hülse (8) an der Entnahmestelle (21) befindet, während sich die Halter (15) der anderen Transportelemente (16) außerhalb der Entnahmestelle (21) befinden.

6. Hülsenmagazin gemäß dem vorherigen Anspruch, **dadurch gekennzeichnet, dass** die Entnahmeeinrichtung (12) für die Entnahme von Hülsen (8) mehrerer der Transportelemente (16) ausgebildet ist und/oder wahlweise pneumatisch oder elektrisch angetrieben ist.

7. Hülsenmagazin gemäß einem oder mehreren der vorherigen Ansprüche, **dadurch gekennzeichnet, dass** die Entnahmestellen (21) der Transportelemente (16) benachbart zueinander angeordnet sind.

8. Hülsenmagazin gemäß einem oder mehreren der vorherigen Ansprüche, **dadurch gekennzeichnet, dass** die Entnahmeeinrichtung (12) ein Schieber (20) ist.

9. Hülsenmagazin gemäß einem oder mehreren der vorherigen Ansprüche, **dadurch gekennzeichnet, dass** den Transportelementen (16) Sensoren (25) zugeordnet sind, um die Position der Hülse (8) an der Entnahmestelle (21) sensorisch erfassen zu können.

10. Hülsenmagazin gemäß einem oder mehreren der vorherigen Ansprüche, **dadurch gekennzeichnet, dass** die Transportelemente (16) benachbart zueinander angeordnet sind.

11. Hülsenmagazin gemäß einem oder mehreren der vorherigen Ansprüche, **dadurch gekennzeichnet, dass** jedes Transportelement (16) einen eigenen Motor (17) oder eine eigene Kupplung aufweist.

12. Hülsenmagazin gemäß einem oder mehreren der vorherigen Ansprüche, **dadurch gekennzeichnet, dass** die Halter (15) Stifte zum Aufstecken oder Auflagen zum Auflegen von Hülsen (8) sind.

13. Hülsenmagazin gemäß einem oder mehreren der vorherigen Ansprüche, **dadurch gekennzeichnet, dass** das Transportelement (16) ein flexibles, quer oder längs der Maschinenausrichtung angeordnetes, umlaufendes Zugmittel, insbesondere eine Kette, ein Seil oder ein Band, ist.

14. Hülsenmagazin gemäß einem oder mehreren der vorherigen Ansprüche, **dadurch gekennzeichnet, dass** das Transportelement (16) oval- oder mäanderförmig geführt ist.

15. Hülsenmagazin gemäß einem oder mehreren der vorherigen Ansprüche, **dadurch gekennzeichnet, dass** das Hülsenmagazin (7) modulartig ausgebildet ist und mehrere Transportelemente (16) in Längs- und/oder Querrichtung der Maschine (1) verlaufend, als jeweils einzelne Module nebeneinander angeordnet sind.
